(19) Europäisches Patentamt
European Patent Office
Office européen des brevets

(11) **EP 4 651 086 A1**

(12) **EUROPEAN PATENT APPLICATION**

(43) Date of publication:
**19.11.2025 Bulletin 2025/47**

(51) International Patent Classification (IPC):
**G06T 11/60** (2006.01)

(21) Application number: **25176108.6**

(52) Cooperative Patent Classification (CPC):
**G06T 11/60**

(22) Date of filing: **13.05.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.05.2024 JP 2024078639**

(71) Applicant: **KONICA MINOLTA, INC.**
**Tokyo 100-7015 (JP)**

(72) Inventor: **HIRANO, Sachiko**
**Tokyo, 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **PROGRAM, IMAGE GENERATION SUPPORTING APPARATUS, IMAGE GENERATION SUPPORTING SYSTEM, AND IMAGE GENERATION SUPPORTING METHOD**

(57)     Disclosed is a program causing a computer to execute: causing a first generative AI to generate, from first data, second text data to be provided to a second generative AI; and causing the second generative AI to generate an image from the second text data.

# FIG.2

**Description**

BACKGROUND OF THE INVENTION

TECHNICAL FIELD

The present invention relates to a program, an image generation supporting apparatus, an image generation supporting system, and an image generation supporting method.

DESCRIPTION OF RELATED ART

Conventionally, when a salesperson at a printing company discusses an image for a print product with a customer, the customer often does not have a clear idea of the image they want to create. Therefore, the salesperson needs to draw the image out of "nothing".

Then, the salesperson generates an image several times and asks the customer to check the image. Thereby, the salesperson finds a design direction and then turns the image over to a designer to complete an official image.

On the other hand, for example, as described in JP 2024-033903A, machine learning has been used to generate an image based on input text data.

SUMMARY OF THE INVENTION

A conventional image generation instruction based on text input requires input of a word that forms an element expressing an image, such as a motif and a description required of the image, and depends on the user's knowledge of design and range of ideas. Therefore, it is difficult for a user who does not have technical knowledge of design, such as a salesperson at a printing company, to obtain an intended image by a simple operation performing image generation.

Therefore, it is an object of the present invention to allow a user to easily obtain an intended generated image, regardless of the user's knowledge of design and range of ideas

To achieve at least one of the abovementioned objects, a program reflecting one aspect of the present invention causes a computer to execute: causing a first generative AI to generate, from first data, second text data to be provided to a second generative AI; and causing the second generative AI to generate an image from the second text data.

To achieve at least one of the abovementioned objects, an image generation supporting apparatus reflecting another aspect of the present invention comprises a hardware processor that: causes a first generative AI to generate, from first data, second text data to be provided to a second generative AI; and causes the second generative AI to generate an image from the second text data.

To achieve at least one of the abovementioned objects, an image generation supporting system reflecting still another aspect of the present invention comprises a hardware processor that: causes a first generative AI to generate, from first data, second text data to be provided to a second generative AI; and causes the second generative AI to generate an image from the second text data.

To achieve at least one of the abovementioned objects, an image generation supporting method reflecting yet another aspect of the present invention is executed by an image generation supporting apparatus and comprises: causing a first generative AI to generate, from first data, second text data to be provided to a second generative AI; and causing the second generative AI to generate an image from the second text data.

BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:

FIG. 1 is a block diagram illustrating a configuration of an image generation supporting system;
FIG. 2 is a flowchart illustrating an image generation supporting process;
FIG. 3 is an image diagram illustrating an image generation supporting screen;
FIG. 4 is an image diagram illustrating the image generation supporting screen;
FIG. 5 is a flowchart illustrating the image generation supporting process;
FIG. 6 is an image diagram illustrating the image generation supporting screen;
FIG. 7 is an image diagram illustrating the image generation supporting screen;
FIG. 8 is an image diagram illustrating the image generation supporting screen;

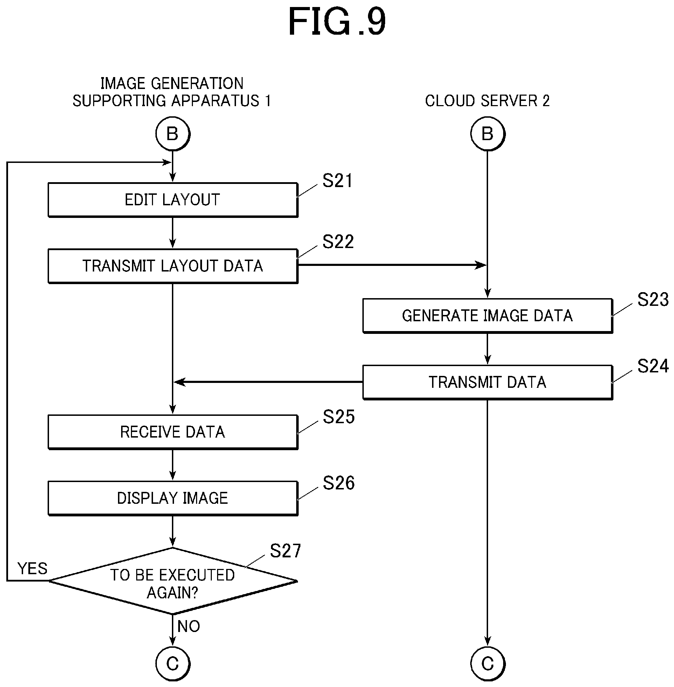

FIG. 9 is a flowchart illustrating the image generation supporting process;

FIG. 10 is an image diagram illustrating the image generation supporting screen;

FIG. 11 is an image diagram illustrating the image generation supporting screen;

FIG. 12 is an image diagram illustrating the image generation supporting screen;

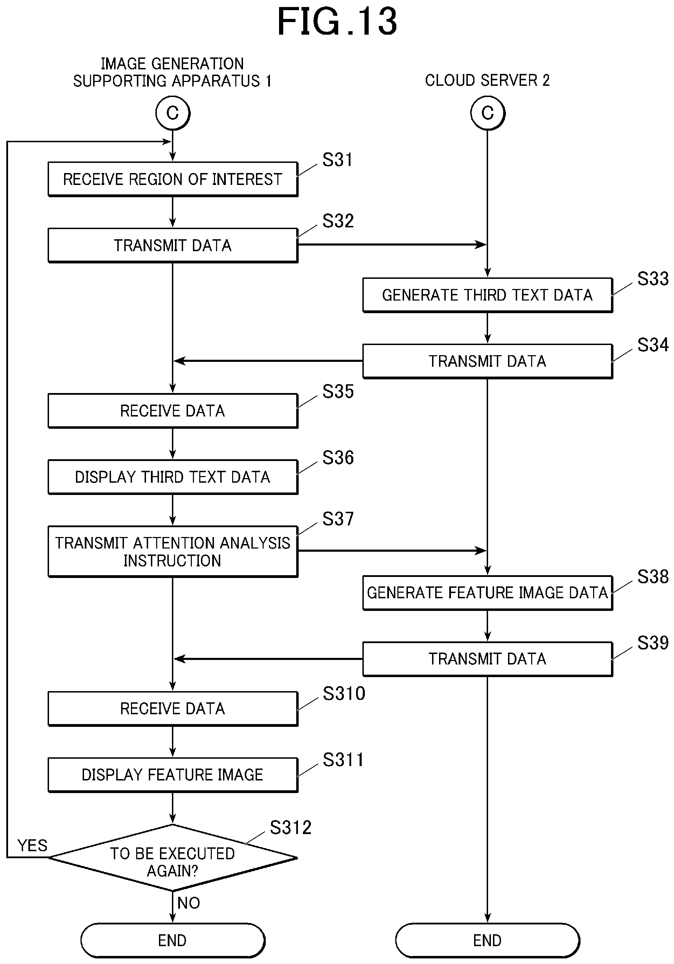

FIG. 13 is a flowchart illustrating the image generation supporting process;

FIG. 14 is an image diagram illustrating the image generation supporting screen;

FIG. 15 is an image diagram illustrating the image generation supporting screen;

FIG. 16 is an image diagram illustrating the image generation supporting screen;

FIG. 17 is an image diagram illustrating the image generation supporting screen;

FIG. 18 is an image diagram illustrating the image generation supporting screen; and

FIG. 19 is an image diagram illustrating a history screen.

DETAILED DESCRIPTION

Hereinafter, one or more embodiments of the present invention will be described with reference to the drawings. However, the scope of the invention is not limited to the disclosed embodiments and drawings.

< Image Generation Supporting System 100 >

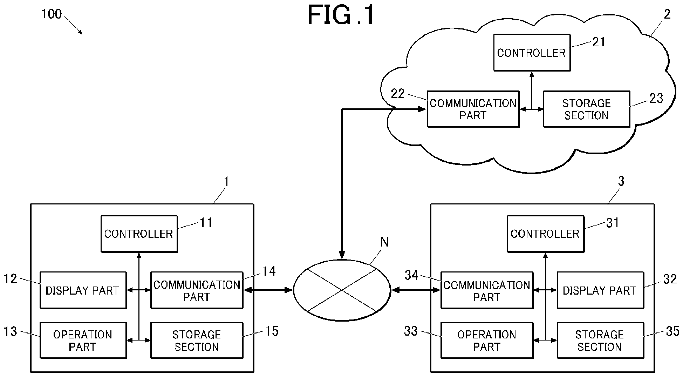

First, a configuration of an image generation supporting system 100 will be described with reference to FIG. 1. As illustrated in FIG. 1, the image generation supporting system 100 includes an image generation supporting apparatus 1, a cloud server 2, and an external device 3. The image generation supporting apparatus 1, the cloud server 2, and the external device 3 transmit and receive information to and from each other via a communication network N.

The image generation supporting apparatus 1 is an apparatus that supports image generation by a user such as a salesperson at a printing company or a customer thereof. Specifically, the image generation supporting apparatus 1 displays an image generated by the cloud server 2 based on text data (first text data) and/or image data input by the user and receives various operations on the generated image by the user.

The cloud server 2 is an AI apparatus that generates second text data from the first text data and/or the image data using an AI text generator (generative AI) and generates an image from the second text data using an AI image generator (generative AI). The second text data is a so-called prompt.

Furthermore, the cloud server 2 is an AI apparatus that extracts design elements, which will be described later, from the generated image using the AI image generator.

The cloud server 2 is also an apparatus that analyzes the saliency of the generated image, described later.

Note that the cloud server 2 may be an on-premise apparatus.

The external device 3 is a device that allows a designer to display the generated image, a concept, and the like.

The communication network N is a local area network (LAN), a wide area network (WAN), the Internet, or the like.

< Image Generation Supporting Apparatus 1 >

Next, a configuration of the image generation supporting apparatus 1 will be described with reference to FIG. 1. As illustrated in FIG. 1, the image generation supporting apparatus 1 includes a controller 11 (hardware processor), a display part 12, an operation part 13, a communication part 14, and a storage section 15.

The controller 11 includes a central processing unit (CPU), a random-access memory (RAM), and the like. The CPU of the controller 11 reads various programs stored in the storage section 15, develops the programs in the RAM, executes various processes in accordance with the developed programs, and controls the operation of each component of the image generation supporting apparatus 1.

The controller 11 functions as a first acquisition unit that acquires text data generated based on an image.

The controller 11 functions as a first display controller that displays the acquired text data on the display part.

The controller 11 functions as an editing unit that edits the text data after displaying the text data.

The controller 11 functions as a second acquisition unit that acquires an image generated based on the edited text data.

The controller 11 functions as a second display controller that displays the acquired generated image on the display part.

The display part 12 includes a monitor such as a liquid crystal display (LCD) and displays various screens and the like in accordance with instructions of display signals input from the controller 11.

The operation part 13 includes a keyboard having cursor keys, number input keys, various function keys, and the like, a pointing device such as a mouse, a touch screen layered on the surface of the display part 12, and the like. The operation part 13 is operable by an operator. The operation part 13 outputs various signals to the controller 11 based on operations performed by the operator.

The communication part 14 can transmit and receive various signals and various data to and from other devices and the like coupled via the communication network N.

The storage section 15 includes a nonvolatile semiconductor memory, a hard disk, or the like, and stores various programs to be executed by the controller 11, parameters required for execution of the programs, various data, and the like.

< Cloud Server 2 >

Next, a configuration of the cloud server 2 will be described with reference to FIG. 1. As illustrated in FIG. 1, the cloud server 2 includes a controller 21 (hardware processor), a communication part 22, and a storage section 23.

The cloud server 2 functions as an AI image generator (generative AI) and as a saliency analysis module.

The controller 21 includes a CPU, a RAM, and the like. The CPU of the controller 21 reads various programs stored in the storage section 23, develops the programs in the RAM, executes various processes in accordance with the developed programs, and controls the operation of each component of the cloud server 2.

The controller 21 generates the second text data from the first text data and/or the image data using the AI text generator and generates an image from the second text data using the AI image generator. The first text data and/or the image data is/are referred to as first data.

The controller 21 functions as a first generation unit that generates text data based on an image. Specifically, the controller 21 extracts design elements, which will be described later, from the image using the AI image generator.

The controller 21 functions as a reception unit that receives specification of a region of interest in a first image from the user using a specification means.

The controller 21 functions as a generation unit that generates and outputs text data corresponding to the first image in accordance with the region of interest received by the reception unit.

The controller 21 functions as a display controller that displays, on the display part, a second image indicating a feature that has been read from the first image when generating the text data.

The controller 21 functions as a setting unit that sets the priority order of design requirements.

The controller 21 functions as a text generation unit that causes the AI text generator to generate, from the first data, the second text data to be provided to the AI image generator.

The controller 21 functions as an image generation unit that causes the AI image generator to generate an image from the second text data.

The controller 21 functions as a display controller that causes the display part to display only the history of related information linked to the same keyword for reference.

The controller 21 functions as an association unit that associates image information including a generated image and information used to generate the image with a restriction condition that restricts sharing of the image information.

The controller 21 functions as a restriction unit that restricts generation or display of image information based on a restriction condition.

The controller 21 functions as an acquisition unit that, based on first client information, acquires second client information, where the client of the second client information is in a competitive relationship with the client of the first client information.

Here, examples of the AI image generator include Stable Diffusion, DALL-E 2, Midjourney, Starry.ai, and Dream by WOMBO.

Examples of the AI text generator include ChatGPT, Bard, Gemini, and Bloom.

The controller 21 can analyze the saliency of a generated design image. That is, the controller 21 can show an analysis result regarding the saliency in the following cases. Specifically, it is a case where an evaluator (e.g., a user) wants to know whether a portion of an image that the evaluator wants to make visually conspicuous is conspicuous. When a portion that is desired to be visually conspicuous is conspicuous, that portion is said to be "salient". Another example is a case where the evaluator wants to know how to make the portion of the image to be evaluated more conspicuous.

(Saliency Analysis Method)

Here, a saliency analysis method will be described.

First, functions of the controller 21 will be described in detail.

The controller 21 functions as a feature value extraction unit and a generation unit.

The controller 21 as the feature value extraction unit extracts a low-order image feature value and a high-order image feature value from the acquired image to be evaluated.

Note that a specific method by which the controller 21 as the feature value extraction unit extracts a low-order image feature value and a high-order image feature value from an image to be evaluated will be described later.

The low-order image feature value is a physical image feature value such as color, luminance, and direction (orientation and shape of an edge) and is a component that extrinsically or passively directs a person's gaze to the image.

In the present embodiment, the low-order image feature value is a concept that broadly includes at least one of the following: color contrast, luminance distribution contrast, and an action.

The impact of an image on a viewer, the degree of gaze (conspicuousness, saliency) varies depending on factors such as the color contrast (for example, the color difference in the red-green direction and the color difference in the yellow-blue direction) used in each portion of the image, the distribution of brightness contrast (luminance difference) in each portion, and contrast in direction (orientation).

For example, a person's gaze is likely to be directed to a portion that has a large color difference along the red-green direction or the yellow-blue direction (boundary portion or the like), and the saliency tends to increase in such a portion.

In addition, for example, in a case where the whole is arranged in a certain direction, when there is a portion arranged in a direction (edge direction) different from the certain direction, a person's gaze tends to be directed to that portion.

Furthermore, the image to be evaluated is not limited to a still image but may be a moving image. When the image to be evaluated is a moving image, various actions (motions, movements) in the image also affect the degree of gaze of the viewer. For example, when only one portion moves at a different speed in an image in which the whole moves at a substantially constant speed in a constant direction or when one portion moves in a direction different from the other portions, a person's gaze tends to be directed to that portion.

The high-order image feature value is a physiological or mental image feature value that reflects a person's memory, experience, knowledge, and the like, and is a component intrinsically or actively directs a person's gaze to the image. More specifically, it is a component derived from a person's mental or psychological tendency, a tendency of gaze movement, and the like, which is considered to affect the impact of an image on the viewer, the degree of gaze (conspicuousness, saliency). In the present embodiment, the high-order image feature value includes at least one of the following degrees: position bias, processing fluency, and face component.

For example, the position bias includes the following tendency as the tendency of gaze movement. Specifically, it is the center bias, where a person's gaze tends to be directed to an object at the center of an image. In addition, for example, in a magazine, a web page, or the like, a person's gaze tends to move from the upper left to the lower right of the image and tends to be directed to the upper left. Furthermore, when a person views a vertically written document, the person's gaze tends to move from the upper right to the lower left and tends to be directed to the upper right. In addition, for example, when a person visits a store such as a supermarket, the person's gaze tends to be directed to a portion of the store's layout that is near eye level.

As described above, the position bias affects the degree of gaze (conspicuousness, saliency) of a person who views an image or the like.

The processing fluency generally refers to the fact that a person finds it easier to process things that are simple or easy to recognize, and more difficult to process things that are complex or difficult to understand. In the present embodiment, a person's gaze tends to be directed to a portion of an image that is easy to recognize and has a high processing fluency, and a person's gaze is hardly directed to a portion that is difficult to recognize and has a low processing fluency.

As described above, the processing fluency affects the degree of gaze (conspicuousness or saliency) of a person who views an image.

In the present embodiment, the degree of processing fluency includes a degree determined by at least one of complexity, density of a depicted object, and spatial frequency of the luminance distribution.

That is, the difficult-to-recognize portion is a messy and complicated portion, that is, a portion where objects and the like depicted in the image are crowded together and are difficult to understand. A sudden change such as an edge occurs in an image at a place where objects and the like are disorderly crowded in the image. The spatial frequency of the luminance distribution is high at such a place. The processing fluency is low in a portion where the complexity, the density of a depicted object, and/or the spatial frequency of the luminance distribution is/are too high.

On the other hand, it is also difficult to read information from a portion where the complexity, the density of a depicted object, and/or the spatial frequency of the luminance distribution is/are too low, i.e., a region where information is not contained. Such a region is difficult for the human brain to process and tends not to be gazed at.

Further, when there is a portion of an image that is recognized as a face, a person generally tends to gaze at that portion. That is, a portion recognized as a face tends to have high saliency.

Furthermore, the high-order image feature value may include a character or a font.

When elements constituting an image are readable characters, the degree of gaze of the viewer is also different depending on the type and size of the font. A font contains characters of a particular typeface, and there are various typefaces such as a print typeface, a block typeface, and a cursive typeface. The degree of attention of the viewer may vary depending on the font used. In addition, a large character tends to draw more attention than a small character even in the same typeface.

In addition, the controller 21 as the generation unit generates a feature value saliency map that indicates the saliency of the image to be evaluated based on an image feature value for each type of the image feature value and then generates a saliency map integrating all the feature value saliency maps.

Note that a specific method by which the controller 21 as the generation unit generates the saliency map will be described later.

Next, the controller 21 performs blurring processing with a Gaussian filter on the image to be evaluated. The blurring processing is processing that reduces the resolution of an image. Specifically, a group of images (a multi-resolution representation of an image, a Gaussian pyramid) is generated for each low-order image feature value by applying a plurality of Gaussian filters having different degrees of blur to the image to be evaluated in stages.

After generating the group of images (Gaussian pyramid) for each component of the image feature value, the controller 21 acquires (calculates) an image-to-image difference on a different scale for each element of the image feature value using the multi-resolution representation.

In the process of calculating the image-to-image difference, the controller 21 calculates at least one or more of a color difference and a luminance difference using an L*a*b* color space obtained by converting RGB data. The L*a*b* color space is better suited to human perception of color differences than the RGB color space. Therefore, calculating at least one or more of the color difference and the luminance difference by the L*a*b* color space produces the following effect. Specifically, values of luminance contrast and chromaticity contrast extracted from the image to be evaluated can be expressed in terms of the color difference and the luminance difference that are suitable for human senses. Therefore, the saliency indicated by the finally obtained saliency map can be better matched to the human senses.

Once the difference image has been acquired, the controller 21 normalizes the difference image and combines the feature value maps of all scales for each component of the image feature value. Next, the controller 21 generates a feature value saliency map corresponding to the combined feature value maps.

The feature value saliency map for a low-order image feature value, for example, for the color component, indicates that the saliency is high in a portion where the color contrast (color difference in the red-green direction or yellow-blue direction) is greatly expressed. For the luminance component, the map indicates that the saliency is high, for example, in a boundary portion between a black portion and a white portion on a screen of a laptop computer. For the direction component, the map indicates that a portion having an edge in an image on a laptop computer has high saliency.

In the present embodiment, the processing fluency (complexity or the like), the position bias, and the face component are extracted as high-order image feature values by the controller 21 as the feature value extraction unit.

Note that here, the processing fluency, the position bias, and the face component are illustrated as high-order image feature values, but as described above, the high-order image feature values are not limited thereto. The high-order image feature values may include various other elements (components).

As described above, the processing fluency can be measured by the degree of complexity and can be analyzed and quantified using, for example, a method called fractal dimension. That is, the image to be evaluated is divided into a plurality of meshes, and analysis is performed to determine which portion is densely composed of dots and which portion is sparsely composed of dots. As a result, a portion having a high fractal dimension is evaluated as a complicated, messy portion. In addition, a portion having a low fractal dimension is evaluated as a simple, low information portion.

Note that as described above, a ground portion, where little information exists, has a low fractal dimension, but that portion is not noticeable much and has low saliency. Therefore, the feature value saliency map related to the processing fluency is a map in which the saliency is low in a ground portion having little information or an excessively complicated portion and the saliency is evaluated to be the highest in a moderately complicated portion.

Further, according to the characteristic and type of the image to be evaluated, the controller 21 generates a feature value saliency map of the position bias corresponding to a place or a direction in which a person's gaze tends to be guided in consideration of psychological characteristics of the person. The characteristic and type of the image are, for example, whether the image is an image to be inserted in a book or a web page or an image to be inserted in a vertically written document.

For example, when the image to be evaluated is to be posted on a web page, the map has high saliency at the upper left of the screen and low saliency at the lower right.

Furthermore, the controller 21 extracts a region that can be recognized as a face from the image to be evaluated by using an AI face region detector or the like and generates a feature value saliency map of the face component. In the feature value saliency map of the face component, the saliency is high in a region that can be recognized as a face.

Next, when the feature value saliency maps are generated for the low-order and high-order image feature values, the controller 21 integrates the feature value saliency maps. Then, the controller 21 performs calculations to determine, when a person views the image to be evaluated, where the person's gaze is directed as a whole and which portion of the image to be evaluated has a high degree of attention or gaze.

In addition, in the process of integrating all the feature value saliency maps, the controller 21 generates a saliency map such that the sum of the degrees of similarity between the saliency map and all the feature value saliency maps is maximized.

Specifically, the controller 21 generates the saliency map so as to satisfy the following equation (1).

[Expression 1]

$$s = \underset{s}{\arg\max} \sum_f w_f \left( \frac{f \cdot s}{|f||s|} \right)^2 \quad \cdots (1)$$

s: Saliency map in which array indexes are rearranged to form a column vector
f: Feature value saliency map in which array indexes are rearranged to form a column vector
$w_f$: A weight for each image feature value

Generating a saliency map such that the above equation (1) is satisfied allows the following saliency map to be generated.

Specifically, when a plurality of feature value saliency maps emphasizes the same portion of the image to be evaluated, the saliency map emphasizes the same portion to the same extent as the plurality of feature value saliency maps.

In addition, when one feature value saliency map excessively emphasizes a portion of the image to be evaluated, and the other feature value saliency maps do not emphasize that portion, the saliency map does not excessively emphasize that portion.

Returning to the description of the configuration of the cloud server 2.

The communication part 22 can transmit and receive various signals and various data to and from other devices and the like coupled via the communication network N.

The storage section 23 includes a nonvolatile semiconductor memory, a hard disk, or the like, and stores various programs to be executed by the controller 21, parameters required for execution of the programs, various data, and the like.

< External Device 3 >

Next, a configuration of the external device 3 will be described with reference to FIG. 1. As illustrated in FIG. 1, the external device 3 includes a controller 31, a display part 32, an operation part 33, a communication part 34, and a storage section 35.

The controller 31 includes a CPU, a RAM, and the like. The CPU of the controller 31 reads various programs stored in the storage section 35, loads the programs into the RAM, executes various processes in accordance with the loaded programs, and controls operations of the components constituting the external device 3.

The display part 32 includes a monitor such as an LCD and displays various screens and the like in accordance with instructions of display signals input from the controller 31.

The operation part 33 includes a keyboard having cursor keys, number input keys, various function keys, and the like, a pointing device such as a mouse, a touch screen layered on the surface of the display part 32, and the like. The operation part 33 is operable by an operator. The operation part 33 outputs various signals to the controller 31 based on operations performed by the operator.

The communication part 34 can transmit and receive various signals and various data to and from other devices and the like coupled via the communication network N.

The storage section 35 includes a nonvolatile semiconductor memory, a hard disk, or the like, and stores various programs to be executed by the controller 31, parameters required for execution of the programs, various data, and the like.

< Image Generation Supporting Process >

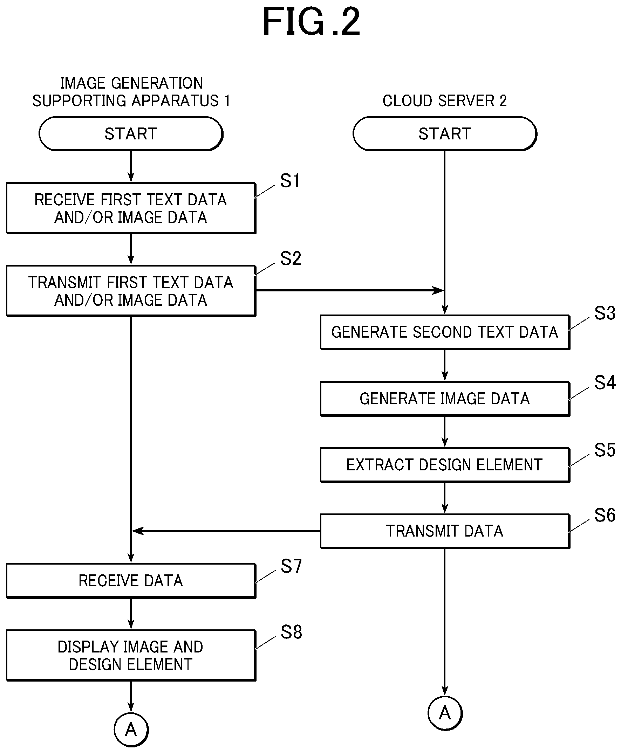

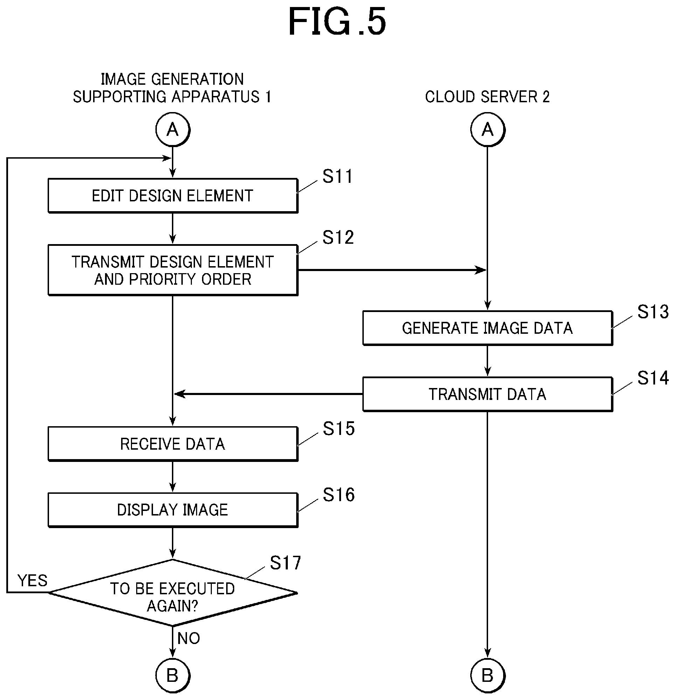

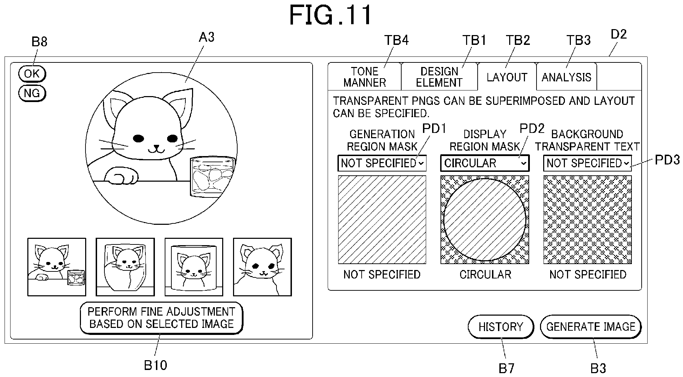

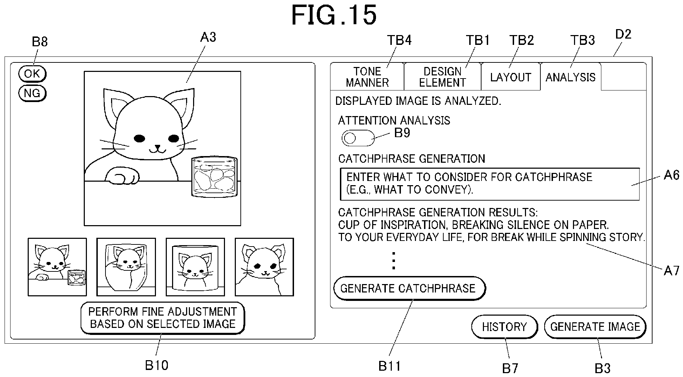

Next, an image generation supporting process will be described with reference to flowcharts illustrated in FIG. 2 (input process), FIG. 5 (design edit process), FIG. 11 (layout edit process), and FIG. 15 (catchphrase generation process).

The image generation supporting process is a process of supporting the user in generating an image and a catchphrase based on the first text data and/or the image data input by the user such as a salesperson at the printing company or a customer thereof.

Although omitted in the flowcharts illustrated in FIGs. 2, 5, 11, and 15, various kinds of generated data are finally transmitted to a terminal device (external device 3) of a designer.

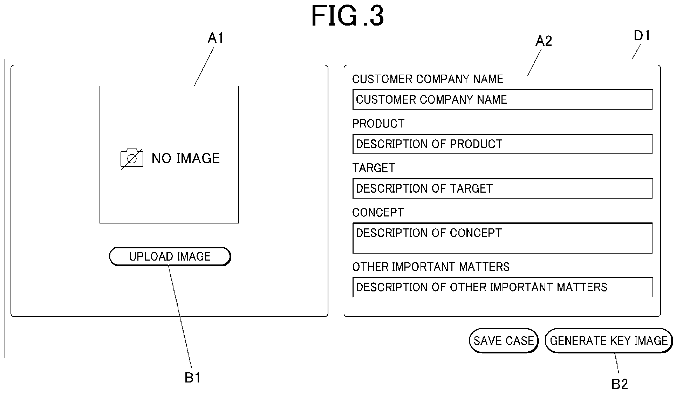

It is assumed that an image generation supporting screen D1 illustrated in FIG. 3 is initially displayed on the display part 12.

(Input Process)

Here, the image generation supporting screen D1 illustrated in FIG. 3 will be described.

A region A1 is for displaying an image input (uploaded) by a user.

A region A2 is where the user inputs the first text data.

The first text data is information about a product to be designed. That is, the first text data may not be a word to be normally input to an AI image generator, such as a direct motif or a description required for an image to be generated by the AI image generator. The first text data includes, for example, a product name, a product type (such as "name" under the Food Sanitation Law), a target (assumed buyer or user), and a product concept.

The first text data may include a keyword for grouping image generation cases (tasks). An image generation case refers to a series of processes in the image generation supporting process, from start to end. The keyword for grouping is, for example, client information such as the company name of a customer of the user ("customer's company name" in FIG. 3). The client information is managed using a client ID in internal processing.

The button B1 is for the user to input (upload) an image.

The button B2 is for causing the cloud server 2 to generate an image (generate a key image). The key image is a generated image serving as a key for subsequent image generation. In the subsequent image generation, an image is derived from the key image. When a fine adjustment mode described later is selected, the degree of derivation becomes narrower than usual, in other words, images that are closer to the key image and more similar to each other are generated.

When various image information is input or generated in the image generation supporting process, the controller 21 stores the image information in the storage section 23 in association with a restriction condition that restricts sharing of the image information (association step). For example, the restriction condition includes a keyword for grouping. In the present example, the various information is associated with the client information.

Further, the controller 21 restricts generation or display of the image information based on the restriction condition (restriction step). Specific details of the process will be described later.

First, a user inputs first text data and/or image data using the operation part 13. The controller 11 receives the input first text data and/or the image data (step S1).

Next, the user presses the button B2 using the operation part 13. The controller 11 transmits the first text data and/or the image data to the cloud server 2 via the network N (step S2).

Next, the controller 21 generates second text data by the AI text generator using the first text data and/or the image data received via the network N (step S3; text generation step).

The controller 21 generates one or more pieces of second text data from the first text data.

In particular, the controller 21 may generate a plurality of different second text data from the first text data.

Here, "different" means that one or more of "motif (object to be drawn, noun)", "description (atmosphere, style)", and "color name (color instruction)" are different.

In particular, when there is a plurality of words of the same type in the second text data, it is preferable that one or more words are different among words whose word order in the second text data of the same type is equal to or less than half of the number of words of the same type. Here, words (text data) of the same type means, for example, that the words are nouns. The term "equal to or less than half" means, for example, up to the first when there are two nouns in the prompt or up to the second when there are five nouns in the prompt.

In addition, the second text data may be generated by giving priority to a combination that results in a greater number of different types of words.

Further, the controller 21 may generate the second text data so that the generated second data is different from second text data associated with the information on the second client having a competitive relationship with the first client (competitive client information).

Specifically, based on the first client information, the controller 21 acquires the second client information, where the client of the second client information is in a competitive relationship with the client of the first client information (acquisition step). Then, the controller 21 restricts generation of the second text data that is the same as or similar to the second text data associated with the second client information (restriction step).

The competitive client information may be input by the user using the operation part 13 to be stored in the storage section 23 by the controller 21.

Furthermore, the controller 21 may automatically determine the competitive client information from the client information and cause the storage section 23 to store the competitive client information. For example, the controller 21 can acquire the competitive client information from the client information and information on the Internet by using an AI or the like.

Next, the controller 21 generates an image by the AI image generator using the second text data (step S4; image generation step). The controller 21 generates the same number of images as the number of pieces of second text data.

Next, the controller 21 extracts (generates) design elements from the generated image by the AI image generator (step S5).

Each of the design elements is a combination of a noun and a modifier for the noun, forming an element that represents the generated image.

Specifically, the controller 21 extracts design elements from an image generated by "a cat looking into a cup" (the second text data) and sets the priority order of the design elements in descending order of saliency by the saliency analysis described above.

Note that the priority order of the design elements may be set without performing the saliency analysis. For example, suppose the second text data is something like "an illustration of a simple background with a cat starting at a cup". The controller 21 may extract design elements from the first piece of the second text data and set the priority order of the design elements according to the order of the extracted design elements.

Further, the controller 21 may generate design elements so that the generated design elements are different from a combination of design elements associated with the information on the second client having a competitive relationship with the first client (competitive client information).

Specifically, based on the first client information, the controller 21 acquires the second client information, where the client of the second client information is in a competitive relationship with the client of the first client information (acquisition step). Then, the controller 21 restricts generation of a combination of design elements that is the same as or similar to the combination of design elements associated with the second client information (restriction step).

Next, the controller 21 transmits the data (generated image and design elements) generated in step S4 and step S5 to the image generation supporting apparatus 1 via the network N (step S6).

Next, the controller 11 receives the data (generated image and design elements) via the network N (step S7; first acquisition step).

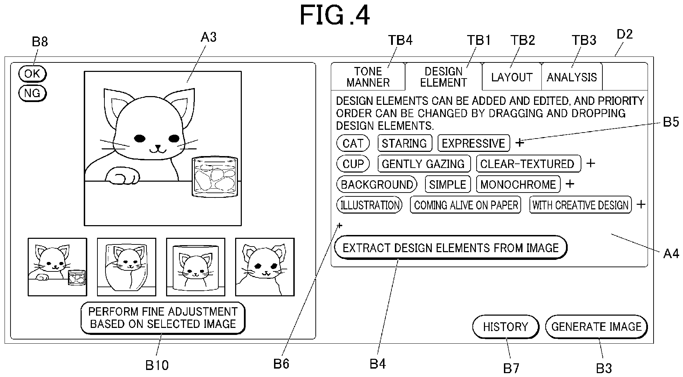

Next, the controller 11 causes the display part 12 to display an image generation supporting screen D2 illustrated in FIG. 4 (step S8; first display step).

(Design Edit Process)

Here, the image generation supporting screen D2 illustrated in FIG. 4 will be described.

A region A3 is for displaying a generated image. When a plurality of generated images is generated, a selected generated image is displayed in a large size in an upper portion, and the other generated images are displayed in a small size side by side in a lower portion. The initial selection of the selected generated image is the generated image on the left side of the lower portion.

A region A4 is for editing the generated image. The display contents of the region A4 change when the user selects any one of tabs TB1 to TB4.

In FIG. 4, a design-element tab TB 1 is selected, and in the region A4, design elements are displayed vertically for each noun, and modifiers for each noun are displayed horizontally to the right of each noun. In the design elements, a noun in the top position has a higher priority, and a modifier in the left position has a higher priority. The controller 21 weights the design elements according to the priority order and generates the second text data. Note that the method for expressing the priority order of the design elements is not limited to this example, and the priority order may be higher for a noun in the lower position, and the priority order may be higher for a modifier in the right portion. In addition, although the design elements are expressed using nouns and modifiers, the present invention is not limited thereto.

Note that the contents of the other tabs will be described later.

A button B3 is for causing the cloud server 2 to generate an image again.

A button B4 is for causing the cloud server 2 to extract design elements again.

Each of buttons B5 and B6 is for the user to manually add a design element. When one of the buttons B5 and B6 is pressed, a field for a design element is added, and the user can input data in the field. Note that the user can select a design element by using the operation part 13 and delete the selected design element by, for example, pressing a DELETE button on the keyboard (operation part 13).

A button B8 is for recording a user's evaluation (OK (good), NG (bad)) of the generated image.

A button B10 is for, when the button B3 is pressed and an image is generated again, generating an image not from scratch but by performing fine adjustment based on the image selected in the region A3 (fine adjustment mode). The process of image generation by the fine adjustment by the controller 21 will be described later.

First, the user edits the design elements of the region A4 using the operation part 13. The controller 11 receives the edited design elements (step S11; edit step).

Specifically, the user can change the priority order by dragging and dropping a design element. The user can drag and drop a line (a set of a noun and modifiers). Furthermore, the user can drag and drop a modifier in a line to change the order of the modifiers. Furthermore, the user can drag and drop a modifier in one line to another line.

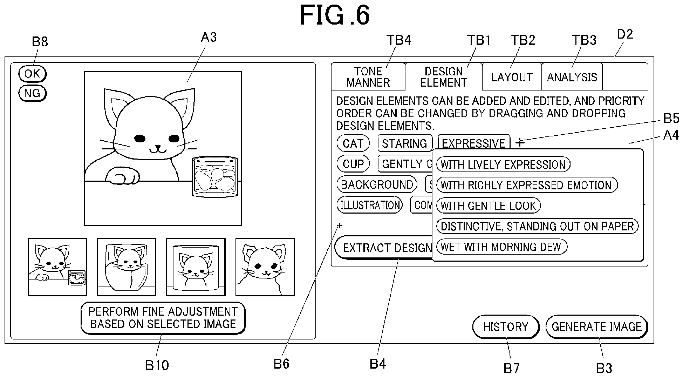

Further, as illustrated in FIG. 6, the user can click on a design element to display a list of related terms associated with that design element. The user can replace the design element by selecting a word from the list of related terms. In this case, the controller 11 causes the cloud server 2 to generate and acquire the related terms associated with the clicked design element. For example, for a design element of "expressive", the controller 21 of the cloud server 2 generates a list of related terms such that two modifying phrases with a different keyword expression (e.g., "full of transparency" and "glass-like"), two modifying phrases matching the list of design elements displayed in the region A4 (e.g., "glowing in the moonlight" and "having a soft, airy feel"), and one random modifying phrase not related to the list of design elements (e.g., "heralding the arrival of spring").

As described above, the user can add a new design element by using each of the buttons B5 and B6. Furthermore, as described above, the user can delete a design element by using the operation part 13.

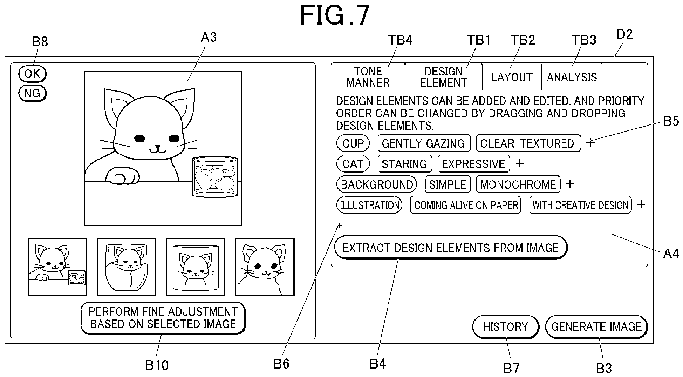

The image generation supporting screen D2 illustrated in FIG. 7 is an example in which the line of cup is moved above the line of cat in the region A4 of the image generation supporting screen D2 illustrated in FIG. 4.

Note that the controller 21 may display related terms for a design element so that the displayed related terms are different from a combination of design elements associated with the information on the second client having a competitive relationship with the first client (competitive client information).

Specifically, based on the first client information, the controller 21 acquires the second client information, where the client of the second client information is in a competitive relationship with the client of the first client information (acquisition step). Then, the controller 21 restricts generation of the related terms so that the generated related terms are different from a combination of the design elements that is the same as or similar to the combination of the design elements associated with the second client information (restriction step).

Next, the user presses the image generation button B3 using the operation part 13. The controller 11 transmits the edited design elements and the priority order to the cloud server 2 via the network N (step S12).

Next, the controller 21 generates an image by the AI image generator using the design elements and the priority order received via the network N (step S13). Note that the controller 21 generates an image in consideration of the content of the image generation in step S4.

Next, the controller 21 transmits the image data generated in step S13 to the image generation supporting apparatus 1 via the network N (step S14).

When the button B 10 is pressed, the controller 21 generates an image by performing fine adjustment based on the image selected in the region A3 in step S13.

When the fine adjustment mode is selected, newly generated images are closer to the original image than in the normal mode (when the button B11 is not pressed) and are similar to each other.

When the fine adjustment mode is selected, the controller 21 generates an image by performing the fine adjustment by changing the image generation method from the normal mode as follows.

- The second text data (prompt) given to the AI image generator is the same, and only the random number seed value is changed.
- The number and/or proportion of words to be changed in the second text data (prompt) given to the AI image generator is reduced.
- In the prompt given to the AI image generator, a word to be changed is only adjective (not noun).
- In the prompt given to the AI image generator, the degree of weighting of a word to be changed is reduced.
- In the prompt given to the AI image generator, a word to be changed is set to appear at the end.

A plurality of the specific methods described above may be applied at the same time.

In addition, the controller 21 may perform the fine adjustment by directly changing a prompt for the AI image generator or may perform the fine adjustment by changing the instruction given to the AI text generator to generate a prompt for the AI image generator.

Next, the controller 11 receives the image data via the network N (step S15; second acquisition step).

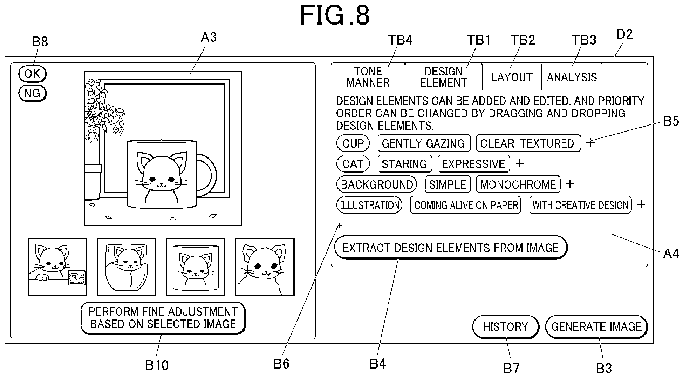

Next, the controller 11 causes the display part 12 to display the image generation supporting screen D2 illustrated in FIG. 8 (step S16; second display step).

In the region A3 of the image generation supporting screen D2 illustrated in FIG. 8, the generated image with priority given to the cup is displayed.

Next, the controller 11 determines whether there is an input to the region A4 by the user (step S17). If there is an input to the region A4 by the user (step S17; YES), the controller 11 determines that the design is to be edited again and advances the image generation supporting process to step S11. If there is no input to the region A4 by the user (step S17; NO), the controller 11 advances the image generation supporting process to step S21.

(Layout Edit Process)

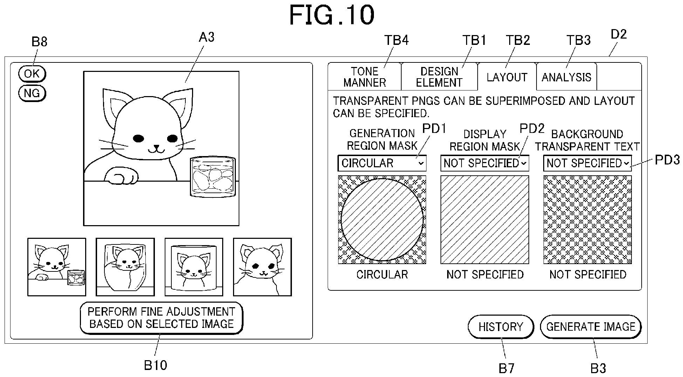

First, the user selects a tab TB2 as illustrated in FIG. 10 and selects layout data in the region A4 by using the operation part 13, thereby editing the layout of the image displayed in the region A3. The controller 11 receives the selected layout data (step S21; reflection step). The layout data is data for a layout to be applied to the image displayed in the region A3. The layout data includes, for example, a generation region mask, a display region mask, and a background transparent text.

The generation region mask is a mask indicating a region (shaded portion) in which the cloud server 2 is to generate an image. The generation region mask is selected from a pull-down PD 1 by the user. The contents of the pull-down PD1 are, for example, "not specified", "circular", "circular (inverted)", "circular gradient", and "gradient".

The display region mask is a mask indicating a region (shaded portion) in which an image is to be displayed. The display region mask is selected from a pull-down PD2 by the user. The contents of the pull-down PD2 are, for example, "not specified", "circular", "circular (inverted)", "circular gradient", and "gradient".

The background transparent text is an image in which the background other than a text portion is transparent. For example, the text portion is a catchphrase. The catchphrase may be a catchphrase (third text data) generated in step S33 described later. The background transparent text is selected from a pull-down PD3 by the user.

The layout data can be input at any time, such as before or during execution of the image generation supporting process.

Furthermore, the controller 21 may cause only the layout data associated with the client information to be displayed.

Furthermore, based on the first client information, the controller 21 acquires the second client information, where the client of the second client information is in a competitive relationship with the client of the first client information (acquisition step). Then, the controller 21 may restrict display of the layout data that is the same as or similar to the layout data associated with the second client information (restriction step).

The image generation supporting screen D2 illustrated in FIG. 10 is a screen when the "circular" is selected in the pull-down PD1 of the generation region mask.

Next, the user presses the image generation button B3 using the operation part 13. The controller 11 transmits the layout data to the cloud server 2 via the network N (step S22).

Next, the controller 21 generates an image by reflecting the layout data received via the network N in the generated image (step S23).

Next, the controller 21 transmits the image data generated in step S23 to the image generation supporting apparatus 1 via the network N (step S24).

Next, the controller 11 receives the image data via the network N (step S25).

Next, the controller 11 causes the display part 12 to display the image generation supporting screen D2 illustrated in FIG. 11 (step S26; third display step).

The image generation supporting screen D2 illustrated in FIG. 11 is a screen when the "circular" is selected in the pull-down PD2 of the display region mask and the generated image in which the display region mask has been reflected is displayed in the region A3.

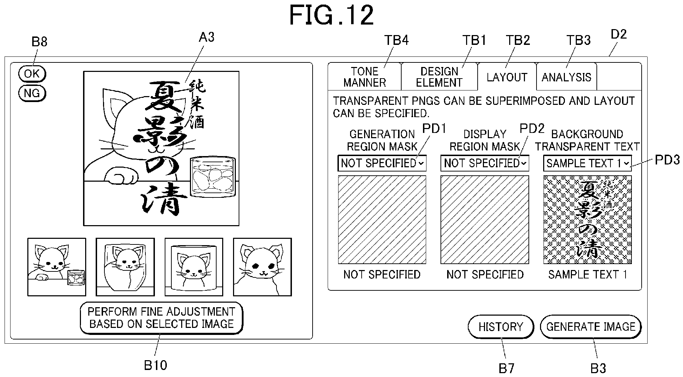

The image generation supporting screen D2 illustrated in FIG. 12 is a screen when the "sample text 1" is selected in the pull-down PD3 of the background transparent text and the generated image in which the background transparent text has been reflected is displayed in the region A3.

Even when the image generation button B3 is pressed again and an image is generated again, the content edited in the layout tab TB3 is maintained in the generated image displayed in the region A3.

Next, the controller 11 determines whether there is an input to the region A4 by the user (step S27). If there is an input to the region A4 by the user (step S27; YES), the controller 11 determines that the layout is to be edited again and advances the image generation supporting process to step S21. If there is no input to the region A4 by the user (step S27; NO), the controller 11 advances the image generation supporting process to step S31.

(Catchphrase Generation Process)

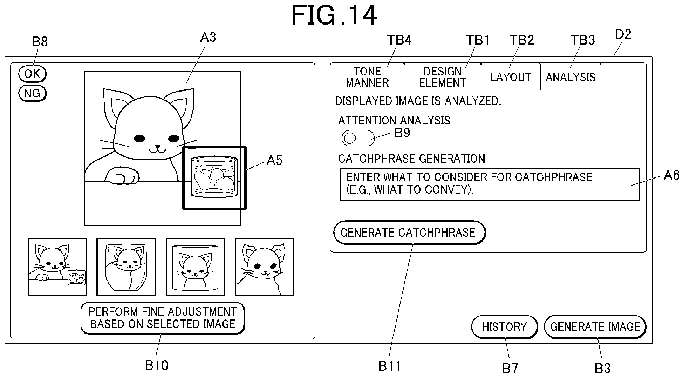

Next, the user selects a tab TB3 as illustrated in FIG. 14 using the operation part 13 and specifies a region of interest A5 in the region A3. The controller 11 receives the specified region of interest A5 (step S31; reception step). For example, the image generation supporting screen D2 illustrated in FIG. 14 is a screen when a cup is surrounded by the region of interest A5.

The region of interest is a region to which attention is paid in generating a catchphrase. In the example of FIG. 14, the region of interest A5 is specified by enclosing the region in the generated image. However, the region of interest A5 may be specified by inputting a text such as "a cup on the right side of the generated image", by inputting the coordinates of the region of interest in the generated image, or by selecting a region from regions obtained by dividing the image (for example, dividing the image into 16 regions).

Next, the user presses a catchphrase generation button B11 using the operation part 13. The controller 11 transmits data indicating the region of interest to the cloud server 2 via the network N (step S32).

Furthermore, text data may be input to a region A6 in order to generate a catchphrase. In this case, the controller 11 also sends the text data to the cloud server 2.

Next, the controller 21 generates a catchphrase (third text) based on the region of interest received via the network N (step S33; third generation step).

Specifically, the controller 21 generates a prompt (second text) for the specified region, such as "pay attention to objects in the region from coordinates x1:y1 to x2:y2", and instructs the AI image generator with the prompt.

A method for generating a catchphrase includes: inputting image data to an AI image recognizer capable of generating a description of an object in an image to obtain a description; generating a prompt for generating a catchphrase by combining the obtained description with an instruction prompt for the region of interest (in the above example, "pay attention to objects in the region from coordinates x1:y1 to x2:y2"); and generating a catchphrase by the AI text generator using the generated prompt. Here, coordinates are used in the prompt indicating the region, but other words may be used to specify the region in internal processing. For example, the prompt indicating the region may be to divide the image into four regions and pay attention to the lower right region.

Note that when the text data input in the region A6 is transmitted, the controller 21 generates a catchphrase based also on the text data.

Further, the controller 21 may generate a catchphrase so that the generated catchphrase is different from a catchphrase associated with the information on the second client having a competitive relationship with the first client (competitive client information). In this case, specifically, the controller 21 generates a different prompt for generating a catchphrase.

Specifically, based on the first client information, the controller 21 acquires the second client information, where the client of the second client information is in a competitive relationship with the client of the first client information (acquisition step). Then, the controller 21 restricts generation of a catchphrase so that the generated catchphrase is different from a catchphrase that is the same as or similar to the catchphrase associated with the second client information (restriction step).

Next, the controller 21 transmits the catchphrase (third text data) generated in step S33 to the image generation supporting apparatus 1 via the network N (step S34).

Next, the controller 11 receives the catchphrase (third text data) via the network N (step S35).

Next, the controller 11 causes the display part 12 to display the image generation supporting screen D2 illustrated in FIG. 15 (step S36). On the image generation supporting screen D2 illustrated in FIG. 15, the catchphrase is displayed in a region A7.

Next, the user presses an attention analysis button B9 (ON) by using the operation part 13. The controller 11 instructs the cloud server 2 to perform attention analysis via the network N (step S37).

Next, the controller 21 generates a feature image (second image) (step S38).

The feature image includes, for example, a saliency map, which is a common example of visualizing human attention. The saliency map is used as a method for computationally visualizing where is most conspicuous in an image and displays a region to which a person's gaze is first directed as a heat map.

Next, the controller 21 transmits the feature image generated in step S38 to the image generation supporting apparatus 1 via the network N (step S39).

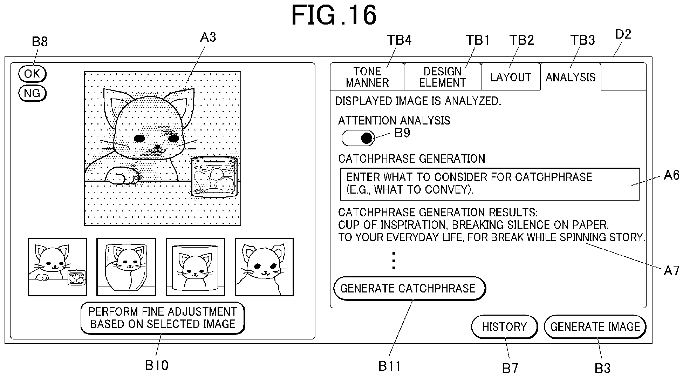

Next, the controller 11 causes the display part 12 to display the image generation supporting screen D2 illustrated in FIG. 16 (step S311; display step). The image generation supporting screen D2 illustrated in FIG. 16 is an example in which the feature image is displayed in the region A3.

Note that pressing the attention analysis button B9 (OFF) allows the screen to return to the normal image display.

Next, the controller 11 determines whether there is an input to the region A4 by the user (step S312). If there is an input to the region A4 by the user (step S312; YES), the controller 11 determines that the region of interest is to be specified again and advances the image generation supporting process to step S31. If there is no input to the region A4 by the user (step S312; NO), the controller 11 ends the image generation supporting process.

Note that the order in which the design edit process, the layout edit process, and the catchphrase generation process are executed is not limited to the above-described example, and these processes can be executed according to the user's selection of the tabs TB1 to TB3.

Furthermore, in the catchphrase generation process, the catchphrase generation processing (steps S31 to S36) and the feature image generation processing (steps S37 to S311) may be performed in reverse order. That is, either processing can be executed in response to the user pressing the corresponding button.

< Others >

The image generation supporting process has been described above with the image generation supporting apparatus 1 and the cloud server 2 as separate apparatuses. However, the image generation supporting apparatus 1 may be provided with various functions of the cloud server 2 so that the image generation supporting process is executed in the image generation supporting apparatus 1.

In this case, the processing content of each step is the same as that of the image generation supporting process, but transmission and reception of data between the image generation supporting apparatus 1 and the cloud server 2 are no longer necessary. For example, the controller 11 does not receive data via the network N but the controller 11 directly acquires the data.

In the image generation supporting screen of FIG. 4, an image may be uploaded directly to the region A3. Furthermore, a region of interest A5 may be set in the uploaded image so that a catchphrase can be generated.

The catchphrase has been used above as an example, but the present invention is not limited to the catchphrase, and suitable text data may be used.

Further, in the catchphrase generation described above, the controller 21 generates a catchphrase directly from an image. However, the controller 21 may generate a catchphrase based on a design element extracted at the time of image generation. When a catchphrase is generated only from a design element, step S31 of setting a region of interest is unnecessary.

Furthermore, the controller 21 may also generate a catchphrase based on the priority order associated with the design elements. For example, the user may initially set "cat" as the design element with the highest priority and cause a catchphrase focused on "cat" to be generated and then exchange the priorities of "cat" and "cup" and cause a catchphrase focused on "cup" with the highest priority to be generated.

In addition, the controller 21 may manage data that includes a set of first data (first text data and/or image data) and at least one generated image corresponding to the first data as a history. Then, the controller 11 may separately display a history screen when a button B7 is pressed. In addition to the generated image, a design element or the like may be included in the history. Further, a history may be acquired every time an image is generated. Further, when there is a plurality of sets, the sets may be shown in chronological order.

Further, the first data may include a keyword for grouping image generation cases. In this case, information related to the generated image may be managed in association with the keyword. The related information includes the generated image and information used to generate the image. When the history screen is separately displayed, according to a keyword input on the image generation supporting screen D1 illustrated in FIG. 3, the controller 11 may cause the display part 12 to display only histories of the related information associated with the same keyword in response to the button B7 being pressed.

The set may also include "response to the generated image (e.g., evaluation such as OK/NG and free-form comments)". The set may also include "input content of a correction instruction (a design element change, a layout change, or the like) for the previously generated image".

Furthermore, although it has been described above that various information input or generated in the image generation supporting process is associated with a restriction condition at the time of input or generation, the present invention is not limited thereto.

When there is image information that is not associated with a restriction condition, in the restriction step, the controller 21 restricts generation or display of image information that is the same as or similar to the image information that is not associated with the restriction condition.

Specifically, the controller 21 restricts generation of second text data that is the same as or similar to second text data that is not associated with the restriction condition (restriction step).

Specifically, the controller 21 restricts generation of a combination of design elements that is the same as or similar to a combination of design elements that is not associated with the restriction condition (restriction step).

Specifically, the controller 21 restricts generation of related terms so that the generated related terms are different from a combination of design elements that are the same as or similar to a combination of design elements that are not associated with the restriction condition (restricting step).

Furthermore, the controller 21 restricts display of layout data that is the same as or similar to layout data that is not associated with the restriction condition (restriction step).

Specifically, the controller 21 restricts generation of a catchphrase so that the generated catchphrase is different from a catchphrase that is the same as or similar to a catchphrase that is not associated with the restriction condition (restriction step).

Further, the display region mask may be a 3D image or a 2D image of a 3D image viewed from a certain direction. The display region mask may be, for example, a template image of a standard product such as a 350 ml can. The display region mask may be, for example, a template image of a direct mail.

Further, an image of the display region mask or the background transparent text may be glossy or shaded according to the template image. For example, in the case of a 350 ml can, the can itself or a text such as a logo formed as an image on the can may be provided with a glossy appearance or shading.

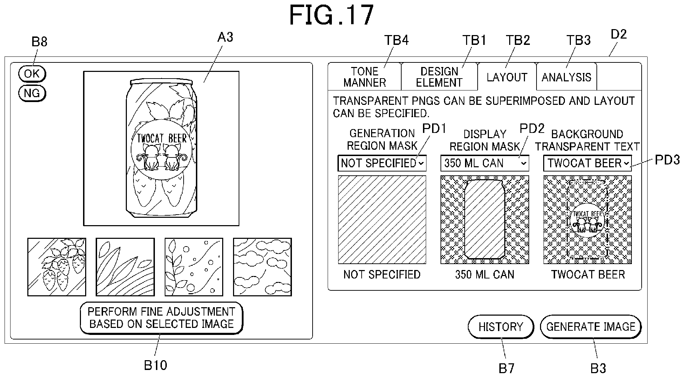

FIG. 17 is an image diagram illustrating the image generation supporting screen when "350 ML CAN" is selected for the display region mask and "TWOCAT BEER" is selected for the background transparent text.

By combining the product appearance image with the generated image, the user can recognize a finished image in concrete terms.

In addition, since the user can change the product appearance image in the upper portion of the region A3 by changing the selection of candidate images displayed in the lower portion of the region A3, the user can select an image considering an appearance element. In other words, according to the present embodiment, rework required for design creation is eliminated, thereby contributing to a reduction in the total cost/time for design creation. Specifically, when an order of 100 designs is given to a designer, the final candidates are narrowed down to 10, and one design is selected at a final meeting, it is possible to reduce investment in designs that are not selected by utilizing the present invention.

An image of the display region mask or the background transparent text may be generated using the AI image generator. For example, the AI image generator may be caused to read the appearance of a 350 ml can to generate an image of the display region mask or the background transparent text may be generated.

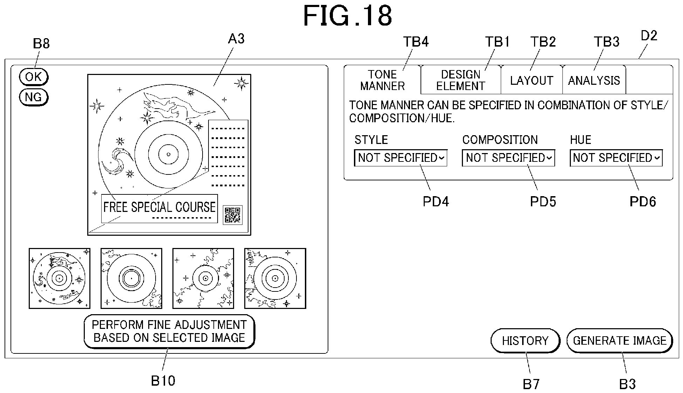

FIG. 18 is an image diagram illustrating the image generation supporting screen when a tone manner tab TB4 is selected. In the example of FIG. 18, a style, a composition, and a hue can be selected from pull-downs PD4, PD5, and PD6 in the tone manner tab TB4, respectively.

The style is an element that characterizes an image, such as a color expression, texture, and illustration technique.

The composition is a design element that indicates an element arrangement in an image, an overall balance of an image, a relative positional relationship between objects and elements, and the like.

The hue refers to the quality and characteristics of color, such as color scheme, color balance, and color contrast.

The controller 21 can change the tone of an image displayed in the region A3 in accordance with the style, composition, and hue selected by the user.

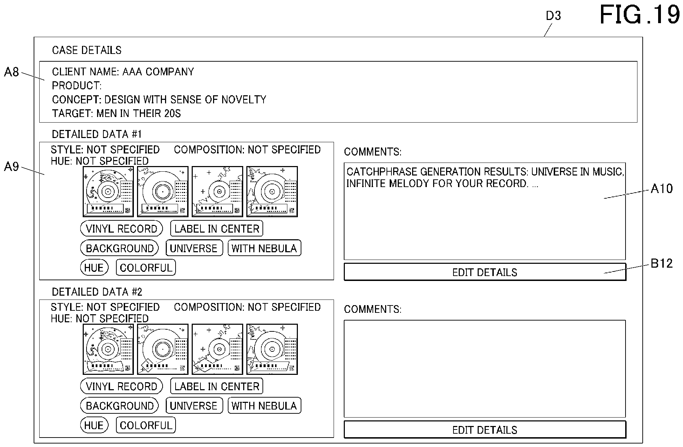

FIG. 19 is an image diagram illustrating a history screen D3.

A history is acquired at a predetermined time, such as when an image is generated or when evaluation (OK/NG) is selected by the user.

In a region A8, the first text data input by the user in the region A2 is displayed.

In a region A9, the generated image displayed in the region A3 and the contents of the tabs TB1 to TB4 are displayed.

A region A10 is a field for the user to input any comment.

A button B12 is used to select a history at any point in time from the recorded histories to restart the image generation supporting process from the selected point in time.

< Effect 1 >

As described above, a program according to the present embodiment causes a computer to execute: acquiring text data generated based on an image (step S7); displaying the acquired text data on a display part (step S8); editing the acquired text data after displaying the text data (step S11); acquiring an image generated based on the edited text data (step S15); and displaying the acquired generated image on the display part (step S16).

This allows the user to generate an intended image by a simple operation (e.g., changing the order of the design elements). In addition, by editing text data generated from an image generated based on a request of the customer and generating an image again, it is possible to quickly obtain a target image that is likely to satisfy the customer.

The image generation supporting apparatus 1 includes: a first acquisition unit (controller 11) that acquires text data generated based on an image; a first display controller (controller 11) that displays the acquired text data on the display part; an editing unit (controller 11) that edits the text data after displaying the acquired text data; a second acquisition unit (controller 11) that acquires an image generated based on the edited text data; and a second display controller (controller 11) that displays the acquired generated image on the display part.

This allows the user to generate an intended image by a simple operation.

The image generation supporting system 100 includes: a first acquisition unit (controller 11) that acquires text data generated based on an image; a first display controller (controller 11) that displays the acquired text data on the display part; an editing unit (controller 11) that edits the text data after displaying the acquired text data; a second acquisition unit (controller 11) that acquires an image generated based on the edited text data; and a second display controller (controller 11) that displays the acquired generated image on the display part.

This allows the user to generate an intended image by a simple operation.

An image generation supporting method according to the present embodiment is executed by an image generation supporting apparatus and includes: acquiring text data generated based on an image (step S7); displaying the acquired text data on a display part (step S8); editing the acquired text data after displaying the text data (step S11); acquiring an image generated based on the edited text data (step S15); and displaying the acquired generated image on the display part (step S16).

This allows the user to generate an intended image by a simple operation.

< Effect 2 >

As described above, the program causes the computer to further execute: receiving specification of a region of interest in a first image from the user using a specification means (step S31); and generating and outputting text data corresponding to the first image according to the region of interest received in the receiving (step S33).

This allows the user to generate intended text data by a simple operation.

In recent years, an AI text generator capable of generating text data such as a catchphrase has emerged. However, in order to generate an intended catchphrase, it is necessary to construct an appropriate instruction sentence (prompt), which requires proficiency. According to the present invention, such proficiency is not required.

The image generation supporting apparatus 1 further includes: a reception unit (controller 11) that receives specification of a region of interest in a first image from the user using a specification means; and a generation unit (controller 11) that generates and outputs text data corresponding to the first image according to the region of interest received by the reception unit.

This allows the user to generate intended text data by a simple operation.

The image generation supporting system 100 further includes: a reception unit (controller 11) that receives specification of a region of interest in a first image from the user using a specification means; and a generation unit (controller 21) that generates and outputs text data corresponding to the first image according to the region of interest received by the reception unit.

This allows the user to generate intended text data by a simple operation.

The image generation supporting method according to the present embodiment is executed by an image generation supporting system and further includes: receiving specification of a region of interest in a first image from the user using a specification means (step S31); and generating and outputting text data corresponding to the first image according to the region of interest received in the receiving (step S33).

This allows the user to generate intended text data by a simple operation.

< Effect 3 >

As described above, the program causes the computer to further execute: causing an AI text generator to generate second text data to be provided to an AI image generator from first data (step S3); and causing the AI image generator to generate an image from the second text data (step S4).

This allows the user to easily obtain an intended image, regardless of the user's knowledge of design and range of ideas.

A conventional image generation instruction based on prompt input requires the user to enter a word that forms an element expressing an image, such as a motif and a description required of the image, and depends on the user's knowledge of design and range of ideas. In addition, the generation of a prompt also involves a trick or a tip and depends on the user's level of proficiency. Therefore, it is difficult for a user who does not have technical knowledge of design, such as a salesperson at a printing company, to obtain an intended image by a simple operation performing image generation. According to the present invention, such proficiency is not required.

In addition, the first data is text data, and the text data is information about a product to be designed.

This allows the user to easily obtain an intended image, regardless of the user's knowledge of design and range of ideas.

The image generation supporting apparatus 1 further includes: a text generation unit (controller 11) that causes an AI text generator to generate second text data to be provided to an AI image generator from first data; and an image generation unit (controller 11) that causes the AI image generator to generate an image from the second text data.

This allows the user to easily obtain an intended image, regardless of the user's knowledge of design and range of ideas.

The image generation supporting system 100 further includes: a text generation unit (controller 21) that causes an AI text generator to generate second text data to be provided to an AI image generator from first data; and an image generation unit (controller 21) that causes the AI image generator to generate an image from the second text data.

This allows the user to easily obtain an intended image, regardless of the user's knowledge of design and range of ideas.

The image generation supporting method according to the present embodiment is executed by the image generation supporting apparatus and further includes: causing an AI text generator to generate second text data to be provided to an AI image generator from first data (step S3); and causing the AI image generator to generate an image from the second text data (step S4).

This allows the user to easily obtain an intended image, regardless of the user's knowledge of design and range of ideas.

< Effect 4 >

As described above, the program causes the computer to further execute: associating image information including a generated image and information used to generate the image with a restriction condition that restricts sharing of the image information; and restricting generation or display of image information based on the restriction condition.

This allows the user to generate an intended image by a simple operation, while preventing information leakage among users and generation of similar images among users.

In addition, the program causes the computer to further execute: acquiring second client information based on first client information, where the client of the second client information is in a competitive relationship with the client of the first client information; and restricting generation or display of image information that is the same as or similar to image information associated with the second client information.

This allows the user to generate an intended image by a simple operation, while preventing information leakage, especially among users in a competitive relationship, and generation of similar images, especially among users in a competitive relationship.

The image generation supporting apparatus 1 according to the present embodiment generates an image from information input by the user and includes: an association unit (controller 11) that associates image information including a generated image and information used to generate the image with a restriction condition that restricts sharing of the image information; and a restriction unit (controller 11) that restricts generation of image information based on the restriction condition.

This allows the user to generate an intended image by a simple operation, while preventing information leakage among users and generation of similar images among users.

The image generation supporting system 100 according to the present embodiment generates an image from information input by the user and includes: an association unit (controller 21) that associates image information including a generated image and information used to generate the image with a restriction condition that restricts sharing of the image information; and a restriction unit (controller 21) that restricts generation of image information based on the restriction condition.

This allows the user to generate an intended image by a simple operation, while preventing information leakage among users and generation of similar images among users.

The image generation supporting method according to the present embodiment causes a computer to generate an image from information input by the user and further includes: associating image information including a generated image and information used to generate the image with a restriction condition that restricts sharing of the image information; and restricting generation or display of image information based on the restriction condition.

This allows the user to generate an intended image by a simple operation, while preventing information leakage among users and generation of similar images among users.

Although the present invention has been described in detail based on the embodiment, the present invention is not limited to the above-described embodiment. The embodiment can be appropriately modified without departing from the spirit and scope of the invention.

For example, although a hard disk, a semiconductor nonvolatile memory, or the like is used in the above description as a computer-readable medium that stores the program according to the present embodiment, the present invention is not limited to this example. Other applicable computer-readable media include portable recording media such as CD-ROM.

The detailed configuration and the detailed operation of each component can be appropriately changed without departing from the spirit and scope of the present invention. Although embodiments of the present invention have been described and shown in detail, the disclosed embodiments are made for purposes of illustration and example only and not limitation. The scope of the present invention should be interpreted by terms of the appended claims.

The entire disclosure of Japanese Patent Application No. 2024-078639 filed on May 14, 2024, is incorporated herein by reference in its entirety.

## Claims

1. A program causing a computer (1, 2) to execute:

   causing a first generative AI to generate, from first data, second text data to be provided to a second generative AI; and
   causing the second generative AI to generate an image from the second text data.

2. The program according to claim 1, wherein the first data is text data about a product to be designed.

3. The program according to claim 1, wherein

   the second text data includes a plurality of different pieces of second text data, and
   the image includes a plurality of images generated respectively from the plurality of different pieces of second text data.

4. The program according to claim 1, wherein

   the first data includes a keyword for grouping an image generation task for the generated image,
   information related to the generated image is managed in association with the keyword, and
   the program causes the computer (1, 2) to further execute causing a display part (12) to display only a history of the information associated with the keyword so that the history is available for reference.

5. An image generation supporting system (100) comprising a hardware processor (11, 21) that:

   causes a first generative AI to generate, from first data, second text data to be provided to a second generative AI; and
   causes the second generative AI to generate an image from the second text data.

6. An image generation supporting method executed by an image generation supporting apparatus (1), comprising:

   causing a first generative AI to generate, from first data, second text data to be provided to a second generative AI; and
   causing the second generative AI to generate an image from the second text data.

FIG.1

100

# FIG.2

IMAGE GENERATION
SUPPORTING APPARATUS 1

CLOUD SERVER 2

```
  ┌─────────────────┐              ┌─────────────────┐
  │      START       │              │      START       │
  └─────────────────┘              └─────────────────┘
           │                                │
           ▼                                │
  ┌─────────────────┐  S1                   │
  │ RECEIVE FIRST    │                      │
  │ TEXT DATA        │                      │
  │ AND/OR IMAGE DATA│                      │
  └─────────────────┘                       │
           │                                │
           ▼                                ▼
  ┌─────────────────┐  S2          ┌─────────────────────┐  S3
  │ TRANSMIT FIRST   │─────────────│ GENERATE SECOND      │
  │ TEXT DATA        │             │ TEXT DATA            │
  │ AND/OR IMAGE DATA│             └─────────────────────┘
  └─────────────────┘                       │
           │                                ▼
           │                      ┌─────────────────────┐  S4
           │                      │ GENERATE IMAGE DATA  │
           │                      └─────────────────────┘
           │                                │
           │                                ▼
           │                      ┌─────────────────────┐  S5
           │                      │ EXTRACT DESIGN       │
           │                      │ ELEMENT              │
           │                      └─────────────────────┘
           │                                │
           │                                ▼
           │◄─────────────────────┌─────────────────────┐  S6
           │                      │ TRANSMIT DATA        │
           ▼                      └─────────────────────┘
  ┌─────────────────┐  S7                   │
  │ RECEIVE DATA     │                      │
  └─────────────────┘                       │
           │                                │
           ▼                                │
  ┌─────────────────┐  S8                   │
  │ DISPLAY IMAGE AND│                      │
  │ DESIGN ELEMENT   │                      ▼
  └─────────────────┘                     ( A )
           │
           ▼
         ( A )
```

# FIG.3

A1

A2

D1

NO IMAGE

UPLOAD IMAGE

B1

CUSTOMER COMPANY NAME

| CUSTOMER COMPANY NAME |

PRODUCT

| DESCRIPTION OF PRODUCT |

TARGET

| DESCRIPTION OF TARGET |

CONCEPT

| DESCRIPTION OF CONCEPT |

OTHER IMPORTANT MATTERS

| DESCRIPTION OF OTHER IMPORTANT MATTERS |

SAVE CASE  GENERATE KEY IMAGE

B2

# FIG.4

B8
A3
TB4 TB1 TB2 TB3 D2

OK
NG

TONE MANNER | DESIGN ELEMENT | LAYOUT | ANALYSIS

DESIGN ELEMENTS CAN BE ADDED AND EDITED, AND PRIORITY ORDER CAN BE CHANGED BY DRAGGING AND DROPPING DESIGN ELEMENTS.

CAT  STARING  EXPRESSIVE  +  — B5

CUP  GENTLY GAZING  CLEAR-TEXTURED  +

BACKGROUND  SIMPLE  MONOCHROME  +

ILLUSTRATION  COMING ALIVE ON PAPER  WITH CREATIVE DESIGN  +

— A4

EXTRACT DESIGN ELEMENTS FROM IMAGE

PERFORM FINE ADJUSTMENT BASED ON SELECTED IMAGE

HISTORY  GENERATE IMAGE

B10  B6  B4  B7  B3

# FIG.5

IMAGE GENERATION
SUPPORTING APPARATUS 1

CLOUD SERVER 2

(A)

(A)

EDIT DESIGN ELEMENT — S11

TRANSMIT DESIGN ELEMENT
AND PRIORITY ORDER — S12

GENERATE IMAGE DATA — S13

TRANSMIT DATA — S14

RECEIVE DATA — S15

DISPLAY IMAGE — S16

TO BE EXECUTED
AGAIN? — S17

YES

NO

(B)

(B)

# FIG.6

# FIG.7

B8  A3  TB4  TB1  TB2  TB3  D2

OK
NG

TONE MANNER | DESIGN ELEMENT | LAYOUT | ANALYSIS

DESIGN ELEMENTS CAN BE ADDED AND EDITED, AND PRIORITY ORDER CAN BE CHANGED BY DRAGGING AND DROPPING DESIGN ELEMENTS.

B5

CUP  GENTLY GAZING  CLEAR-TEXTURED  +

CAT  STARING  EXPRESSIVE  +

BACKGROUND  SIMPLE  MONOCHROME  +

ILLUSTRATION  COMING ALIVE ON PAPER  WITH CREATIVE DESIGN  +

A4

EXTRACT DESIGN ELEMENTS FROM IMAGE

PERFORM FINE ADJUSTMENT BASED ON SELECTED IMAGE

HISTORY  GENERATE IMAGE

B10  B6  B4  B7  B3

# FIG.8

TB4 — TONE MANNER
TB1 — DESIGN ELEMENT
TB2 — LAYOUT
TB3 — ANALYSIS

DESIGN ELEMENTS CAN BE ADDED AND EDITED, AND PRIORITY ORDER CAN BE CHANGED BY DRAGGING AND DROPPING DESIGN ELEMENTS.

CUP  GENTLY GAZING  CLEAR-TEXTURED  +

CAT  STARING  EXPRESSIVE  +

BACKGROUND  SIMPLE  MONOCHROME  +

ILLUSTRATION  COMING ALIVE ON PAPER  WITH CREATIVE DESIGN  +

EXTRACT DESIGN ELEMENTS FROM IMAGE

OK
NG

PERFORM FINE ADJUSTMENT BASED ON SELECTED IMAGE

HISTORY  GENERATE IMAGE

# FIG.9

IMAGE GENERATION
SUPPLYING APPARATUS 1

CLOUD SERVER 2

(B)

(B)

EDIT LAYOUT — S21

TRANSMIT LAYOUT DATA — S22

GENERATE IMAGE DATA — S23

TRANSMIT DATA — S24

RECEIVE DATA — S25

DISPLAY IMAGE — S26

S27

TO BE EXECUTED
AGAIN?

YES

NO

(C)

(C)

# FIG.10

EP 4 651 086 A1

# FIG.11

# FIG.12

# FIG.13

IMAGE GENERATION
SUPPORTING APPARATUS 1
CLOUD SERVER 2

Ⓒ                                                    Ⓒ

| RECEIVE REGION OF INTEREST | S31 |

| TRANSMIT DATA | S32 |

| GENERATE THIRD TEXT DATA | S33 |

| TRANSMIT DATA | S34 |

| RECEIVE DATA | S35 |

| DISPLAY THIRD TEXT DATA | S36 |

| TRANSMIT ATTENTION ANALYSIS INSTRUCTION | S37 |

| GENERATE FEATURE IMAGE DATA | S38 |

| TRANSMIT DATA | S39 |

| RECEIVE DATA | S310 |

| DISPLAY FEATURE IMAGE | S311 |

S312

YES ◇ TO BE EXECUTED AGAIN?

NO

( END )                                               ( END )

# FIG.14

B8

A3

TB4 TB1 TB2 TB3 D2

| TONE MANNER | DESIGN ELEMENT | LAYOUT | ANALYSIS |

OK
NG

DISPLAYED IMAGE IS ANALYZED.

ATTENTION ANALYSIS
B9

A5

CATCHPHRASE GENERATION

ENTER WHAT TO CONSIDER FOR CATCHPHRASE (E.G., WHAT TO CONVEY). — A6

GENERATE CATCHPHRASE

PERFORM FINE ADJUSTMENT BASED ON SELECTED IMAGE

HISTORY GENERATE IMAGE

B10

B11

B7 B3

# FIG.15

B8  A3  TB4  TB1  TB2  TB3  D2

OK
NG

TONE MANNER | DESIGN ELEMENT | LAYOUT | ANALYSIS

DISPLAYED IMAGE IS ANALYZED.

ATTENTION ANALYSIS
— B9

CATCHPHRASE GENERATION

ENTER WHAT TO CONSIDER FOR CATCHPHRASE (E.G., WHAT TO CONVEY).  — A6

CATCHPHRASE GENERATION RESULTS:
CUP OF INSPIRATION, BREAKING SILENCE ON PAPER.
TO YOUR EVERYDAY LIFE, FOR BREAK WHILE SPINNING STORY.
— A7

GENERATE CATCHPHRASE

PERFORM FINE ADJUSTMENT BASED ON SELECTED IMAGE

HISTORY  GENERATE IMAGE

B10  B11  B7  B3

# FIG.16

B8
A3
TB4  TB1  TB2  TB3  D2

OK
NG

TONE MANNER | DESIGN ELEMENT | LAYOUT | ANALYSIS

DISPLAYED IMAGE IS ANALYZED.

ATTENTION ANALYSIS
B9

CATCHPHRASE GENERATION

ENTER WHAT TO CONSIDER FOR CATCHPHRASE (E.G., WHAT TO CONVEY).
A6

CATCHPHRASE GENERATION RESULTS:
CUP OF INSPIRATION, BREAKING SILENCE ON PAPER.
TO YOUR EVERYDAY LIFE, FOR BREAK WHILE SPINNING STORY.
A7

GENERATE CATCHPHRASE

PERFORM FINE ADJUSTMENT BASED ON SELECTED IMAGE

B10

B11

HISTORY  GENERATE IMAGE

B7  B3

# FIG.17

B8    A3    TB4   TB1   TB2   TB3   D2

OK
NG

| TONE MANNER | DESIGN ELEMENT | LAYOUT | ANALYSIS |

TRANSPARENT PNGS CAN BE SUPERIMPOSED AND LAYOUT CAN BE SPECIFIED.

GENERATION REGION MASK   PD1   DISPLAY REGION MASK   PD2   BACKGROUND TRANSPARENT TEXT

NOT SPECIFIED ▾   350 ML CAN ▾   TWOCAT BEER ▾  — PD3

NOT SPECIFIED    350 ML CAN    TWOCAT BEER

TWOCAT BEER

PERFORM FINE ADJUSTMENT BASED ON SELECTED IMAGE

B10

HISTORY    GENERATE IMAGE

B7    B3

# FIG.18

TONE MANNER CAN BE SPECIFIED IN COMBINATION OF STYLE/ COMPOSITION/HUE.

STYLE — NOT SPECIFIED — PD4

COMPOSITION — NOT SPECIFIED — PD5

HUE — NOT SPECIFIED — PD6

FREE SPECIAL COURSE

PERFORM FINE ADJUSTMENT BASED ON SELECTED IMAGE — B10

TONE MANNER — TB4
DESIGN ELEMENT — TB1
LAYOUT — TB2
ANALYSIS — TB3
D2

OK / NG — B8

A3

HISTORY — B7

GENERATE IMAGE — B3

FIG.19

D3

CASE DETAILS

A8 — CLIENT NAME: AAA COMPANY
PRODUCT:
CONCEPT: DESIGN WITH SENSE OF NOVELTY
TARGET: MEN IN THEIR 20S

DETAILED DATA #1

STYLE: NOT SPECIFIED    COMPOSITION: NOT SPECIFIED
HUE: NOT SPECIFIED

A9 —

(VINYL RECORD) [LABEL IN CENTER]
(BACKGROUND) [UNIVERSE] [WITH NEBULA]
(HUE) [COLORFUL]

COMMENTS:

CATCHPHRASE GENERATION RESULTS: UNIVERSE IN MUSIC,
INFINITE MELODY FOR YOUR RECORD. ...

— A10

EDIT DETAILS — B12

DETAILED DATA #2

STYLE: NOT SPECIFIED    COMPOSITION: NOT SPECIFIED
HUE: NOT SPECIFIED

(VINYL RECORD) [LABEL IN CENTER]
(BACKGROUND) [UNIVERSE] [WITH NEBULA]
(HUE) [COLORFUL]

COMMENTS:

EDIT DETAILS

EP 4 651 086 A1

| | Europäisches Patentamt European Patent Office Office européen des brevets | **EUROPEAN SEARCH REPORT** | **Application Number** EP 25 17 6108 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LONG LIAN ET AL: "LLM-grounded Diffusion: Enhancing Prompt Understanding of Text-to-Image Diffusion Models with Large Language Models", ARXIV.ORG, CORNELL UNIVERSITY LIBRARY, 201 OLIN LIBRARY CORNELL UNIVERSITY ITHACA, NY 14853, 23 May 2023 (2023-05-23), XP091515696, * sections 3.1, 3.2; figures 3,5 * | 1-6 | INV. G06T11/60 |
| X | LIU VIVIAN ET AL: "3DALL-E: Integrating Text-to-Image AI in 3D Design Workflows", PROCEEDINGS OF THE 2023 ACM DESIGNING INTERACTIVE SYSTEMS CONFERENCE, 20 October 2022 (2022-10-20), pages 1955-1977, XP093111873, New York, NY, USA ISBN: 978-1-4503-9893-0 * sections 3.1, 3.2; figure 2 * | 1-6 | |
| A | US 2019/279409 A1 (KIM JOOYOUNG [KR] ET AL) 12 September 2019 (2019-09-12) * paragraphs [0056] - [0062]; figures 1,2A * | 1-6 | TECHNICAL FIELDS SEARCHED (IPC) G06T |
| A | US 2024/127511 A1 (BRDICZKA OLIVER [US] ET AL) 18 April 2024 (2024-04-18) * paragraphs [0003] - [0005], [0021] - [0027], [0053] - [0055]; figure 1 * | 1-6 | |

The present search report has been drawn up for all claims

| Place of search | Date of completion of the search | Examiner |
|---|---|---|
| Munich | 9 September 2025 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 6108

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2025

| Patent document cited in search report | Publication date | Patent family member(s) | Publication date |
|---|---|---|---|
| US 2019279409 A1 | 12-09-2019 | US 2019279409 A1 <br> WO 2019177344 A1 | 12-09-2019 <br> 19-09-2019 |
| US 2024127511 A1 | 18-04-2024 | AU 2023214217 A1 <br> DE 102023120654 A1 <br> US 2024127511 A1 | 02-05-2024 <br> 18-04-2024 <br> 18-04-2024 |

EPO FORM P0459

For more details about this annex : see Official Journal of the European Patent Office, No. 12/82

**EP 4 651 086 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024033903 A

- JP 2024078639 A